# EUROPÄISCHE PATENTSCHRIFT

(11) **EP 2 218 661 B1**
(45) Veröffentlichungstag und Bekanntmachung des Hinweises auf die Patenterteilung: **01.08.2012**
(21) Anmeldenummer: 09015547.4
(22) Anmeldetag: 16.12.2009
(51) Int. Cl.: B65G 21/22, B65G 47/96

(54) **Sortierförderer**
Sorting conveyor
Convoyeur de triage

(30) Priorität: 16.02.2009 DE 102009009044
(43) Veröffentlichungstag der Anmeldung: 18.08.2010
(73) Patentinhaber: BEUMER GmbH & Co. KG, 59269 Beckum (DE)
(72) Erfinder: Heitplatz, Heino, 48317 Drensteinfurt (DE)
(74) Vertreter: Philipp, Matthias

(56) Entgegenhaltungen:
- EP-A2- 1 352 858
- US-A- 3 114 332
- US-A- 4 729 466

## Beschreibung

Die Erfindung betrifft einen Sortierförderer nach dem Oberbegriff des Anspruchs 1, wie er aus der EP-A-1 352 858 bekannt ist.

Sortierförderer in Form von Sorterketten werden üblicherweise als Fahrwagenketten ausgebildet, wobei die Fahrwagen aus einem Gestell bestehen, an dem einerseits Tragrollen zur vertikalen Abtragung von Gewichtskräften und Führungsrollen zur horizontalen Abtragung von Führungskräften in ortsfesten Fahrschienen angebracht sind. Das Gestell trägt weiterhin ein oder mehrere lasttragende Elemente, beispielsweise mechanisch oder elektrisch betätigte Kippelemente oder Quergurtelemente. Daneben wird das Gestell üblicherweise genutzt, um Antriebskräfte einzuleiten. Die Fahrwagen selbst sind untereinander mit Gelenken an, ihren Enden zu einer endlosen Kette geschlossen. Eine derartige Anordnung ist aus der DE 40 90 308 bekannt.

Bei dieser Bauweise sind die Führungs- und Tragrollen in der Regel in Förderrichtung gesehen am vorderen oder hinteren Ende des Fahrwagens vorzugsweise symmetrisch zur Mittellinie des Sortierförderers angeordnet.

Die horizontale Führung der Fahrwagen in der Fahrschiene wird durch die Führungsrollen gewährleistet, deren Achsen senkrecht zur Bodenebene ausgerichtet sind. Die lasttragenden Tragrollen stützen sich auf horizontalen Laufflächen der Fahrschiene ab, die meist einen C-förmigen Querschnitt aufweist, so dass der obere Schenkel des C-Profils mit geringem Luftspalt zur Tragrolle eine Abhebesicherung bildet. Zweckmäßigerweise sind die Tragrollen jeweils an einem zusätzlichen Bauteil gehalten, das jeweils um eine vertikale Achse an dem Gestell schwenkbar angeordnet ist, so dass die Tragrolle bezüglich der vertikalen Schwenkachse nachlaufend angeordnet ist. Bei Kurvenfahrt richtet sich die Tragrolle so aus, dass ihre Drehachse durch den Mittelpunkt der Horizontalkurve verläuft, so dass ein erhöhter Bewegungswiderstand der Fahrwagenkette durch übermäßige Reibung zwischen Tragrollen und Fahrschiene vermieden wird.

Ein Nachteil dieser Bauform besteht darin, dass aufgrund der relativ langen Fahrwagen bzw. Gestelle ein erheblicher Polygoneffekt in Kurven auftritt, der zu schwellenden Zugkräften im Takt der Fahrwagenteilung führt und daher Geräuschbildung und Verschleiß begünstigt.

Ein weiterer Nachteil tritt dann auf, wenn die Verbindungsgelenke der Fahrwagen nicht in gleicher Höhe mit den Führungsrollen liegen, da dann aufgrund der Zugkräfte in der Kette Querkräfte auftreten, die zu Kippmomenten und zu einem kurzzeitigen Abheben der kurvenäußeren Tragrollen führen können. Beim Anschlagen der Tragrolle an die Abhebesicherung in Form des oberen Schenkels des die Fahrschiene bildenden C-Profils kommt es zu einer Drehrichtungsumkehr der Tragrolle, was zu erhöhten Geräuschen und zu verstärktem Verschleiß an Tragrollen und Fahrschienen führt.

Weiterhin kann sich bei dem bekannten Sortierförderer nachteilig auswirken, dass bei Kurvendurchfahrt der Fahrwagen aufgrund des Polygoneffekts so stark verdreht, dass der sonst durch die Führungsrollen eng geführte Fahrwagen einen erhöhten horizontalen Spielraum aufweist, was unerwünscht ist, da durch den Einlauf der Gelenklagerverbindung die anfangs eingestellte Kettenvorspannung bis hin zur Schlaffkette nachlassen kann und damit gegebenenfalls undefinierte Bewegungen der Fahrwagen in den Kurven möglich sind.

Das genannte Spiel hat in Verbindung mit einer kontaktlosen Energieübertragung von der ortsfesten Fahrschiene zum bewegten Fahrwagen, beispielsweise mittels Induktionsprinzip, insbesondere mittels Linearmotortechnik, mangels exakter horizontaler Führung der Fahrwagen als weiteren Nachteil zur Folge, dass die Energieübertragung und auch die übertragbare Leistung gemindert werden.

Schließlich sind durch die Anbindung der Tragrollen als Nachläufer diese bei Rückwärtsbewegungen des Sortierförderers in ihrer Ausrichtung undefiniert, was bereits nach kurzer Rückwärtsbewegung zu einem unkontrollierten Ausschwenken der Tragrollen führt. Durch diese Schiefstellung erhöht sich der Bewegungswiderstand um ein Vielfaches. Daher haben derart aufgebaute Sortierförderer eine festgelegte Förderrichtung und sind für einen Reversierbetrieb nicht geeignet.

Die Aufgabe der Erfindung besteht darin, einen Sortierförderer mit einer Reihe von gelenkig miteinander verbundenen, entlang einer Fahrbahn geführten und verfahrbaren Fahrwagen dahingehend zu verbessern, dass die vorstehend genannten Nachteile nicht mehr auftreten.

Zur Lösung dieser Aufgabe schlägt die Erfindung eine Bauweise vor, bei der die Fahrwagen jeweils eine Führungseinheit und eine damit gelenkig verbundene Trageinheit aufweisen, wobei jede Führungseinheit auf jeder Seite an übereinstimmenden Längspositionen eine Tragrolle zum Zusammenwirken mit der Fahrbahn aufweist, und wobei jeder Tragrolle zwei Führungsrollen zugeordnet sind, von denen eine erste an einer ersten Längsposition mit Abstand vor und eine zweite an einer zweiten Längsposition mit Abstand hinter der jeweiligen Tragrolle angeordnet ist, wobei zwischen der Führungseinheit und der Trageinheit eines Fahrwagens ein um eine senkrecht zu einer Fahrbahnebene ausgerichtete Schwenkachse schwenkbares Koppelgelenk und zwischen benachbarten Fahrwagen ein in jeder Richtung drehbares Verbindungsgelenk angeordnet ist, und wobei das Verbindungsgelenk und das Koppelgelenk jeweils an Längspositionen außerhalb eines Bereichs zwischen der ersten und der zweiten Längsposition der Führungsrollen an diesen Längspositionen oder an einer übereinstimmenden Längsposition mittig dazwischen angeordnet sind.

Bei der erstgenannten Variante kann in vorteilhafter Weise erreicht werden, dass die Führungseinheiten und die Trageinheiten übereinstimmende Längen aufweisen, so dass der Polygoneffekt minimiert wird. Dies ist dann der Fall, wenn das Verbindungsgelenk und das Koppelgelenk einer jeden Führungseinheit an Längspositionen in gleichen Abständen vor und hinter der Längsposition der Tragrollen angeordnet sind und einen ersten gegenseitigen Abstand aufweisen, und Verbindungs- und Koppelgelenke einer jeden Trageinheit einen gegenseitigen Abstand aufweisen, der mit dem ersten gegenseitigen Abstand übereinstimmt.

Bei allen Varianten kann bevorzugt vorgesehen sein, dass die Tragrollen einer Führungseinheit um eine gemeinsame horizontale Drehachse drehbar sind. Außerdem ist bevorzugt vorgesehen, dass jede Tragrolle mittig zwischen zwei unmittelbar benachbarten Führungsrollen angeordnet ist. Damit kann eine erste Führungsrolle an einer ersten Längsposition mit Abstand vor und eine zweite Führungsrolle mit gleichem Abstand hinter einer jeweiligen Tragrolle angeordnet sein.

Weiterhin ist es zweckmäßig, wenn die Führungsrollen um vertikale Drehachsen drehbar sind, d.h. parallel zur Schwenkachse des Verbindungsgelenks.

Es kann zweckmäßig sein, wenn die Führungsrollen einer Führungseinheit in einem Längsabstand angeordnet sind, der kleiner ist als ein Querabstand der Führungsrollen senkrecht zur Förderrichtung gesehen.

Bevorzugt ist vorgesehen, dass die Führungsrollen der Führungseinheit in gleicher Höhe wie der Drehpunkt des Verbindungsgelenkes angeordnet werden. Dadurch wird vermieden, dass in horizontalen Kurven die aus den Kettenzugkräften resultierenden Querkräfte zu einem auf den Fahrwagen wirkenden Kippmoment führen.

Bevorzugt ist weiterhin vorgesehen, dass die Führungsrollen einer Führungseinheit in gleicher Höhe wie die Drehachsen der Tragrollen angeordnet sind.

Es kann vorgesehen sein, dass die Tragrollen motorisch antreibbar sind. Alternativ kann vorgesehen sein, dass die Führungseinheiten und/oder die Trageinheiten ein Reaktionsteil zur Übertragung von Antriebskräften durch Reibrad- oder Linearantrieb aufweisen. Das Reaktionsteil kann in Form eines Stators oder eines Antriebsteils eines Linearmotors ausgebildet sein, wobei das jeweils andere Antriebselement im Bereich der Fahrbahn feststehend angeordnet ist oder durch diese gebildet wird.

Hierbei besteht die Möglichkeit, dass die Reaktionsteile als flache, senkrecht und in Förderrichtung orientierte Bauteile gebildet sind, deren in Förderrichtung weisende Enden im Bereich eines Verbindungsgelenks kreissegmentförmig abgerundet sind und einen engen Spalt zu einem benachbarten Reaktionsteil bilden.

Zweckmäßigerweise ist vorgesehen, dass auf jedem Fahrwagen mindestens ein lasttragendes Element angeordnet ist. Die lasttragenden Elemente können mechanisch oder elektrisch betätigte Kippelemente oder Quergurtelemente sein.

Insbesondere kann vorgesehen sein, dass jeder Fahrwagen mit zwei lasttragenden Elementen versehen ist, von denen eines auf der Führungseinheit und eines auf der Trageinheit angeordnet ist. Die lasttragenden Elemente eines Fahrwagens können gleich groß sein.

Weitere Vorteile und Merkmale der Erfindung ergeben sich aus der nachfolgenden Beschreibung von bevorzugten Ausführungsformen, wobei
Fig. 1 einen Teilbereich eines erfindungsgemäßen Sortierförderers ohne lasttragende Elemente in einer perspektivischen Ansicht schräg von oben zeigt,
Fig. 2 einen Ausschnitt des Sortierförderers nach Fig. 1 in einem vergrößerten Maßstab zeigt,
Fig. 3 einen Teilbereich eines erfindungsgemäßen Sortierförderers in einer Ansicht von unten zeigt,
Fig. 4 den Teilbereich des Sortierförderers nach Fig. 3 von oben zeigt,
Fig. 5 einen Fahrwagen eines erfindungsgemäßen Sortierförderers in einer schematischen Skizze zeigt,
Fig. 6a-c drei unterschiedliche Ausführungsformen der Erfindung erläutern,
Fig. 7 den Einfluss der Fahrwagengeometrie auf den Polygoneffekt erläutert,
Fig. 8a-c bevorzugte Ausführungsformen der Erfindung bei Durchfahren einer Vertikalkurve erläutern, und
Fig. 9 eine bevorzugte Ausführungsform der Erfindung nach Fig. 6a mit zwei Tragelementen je Fahrwagen in einer schematischen Draufsicht zeigt.

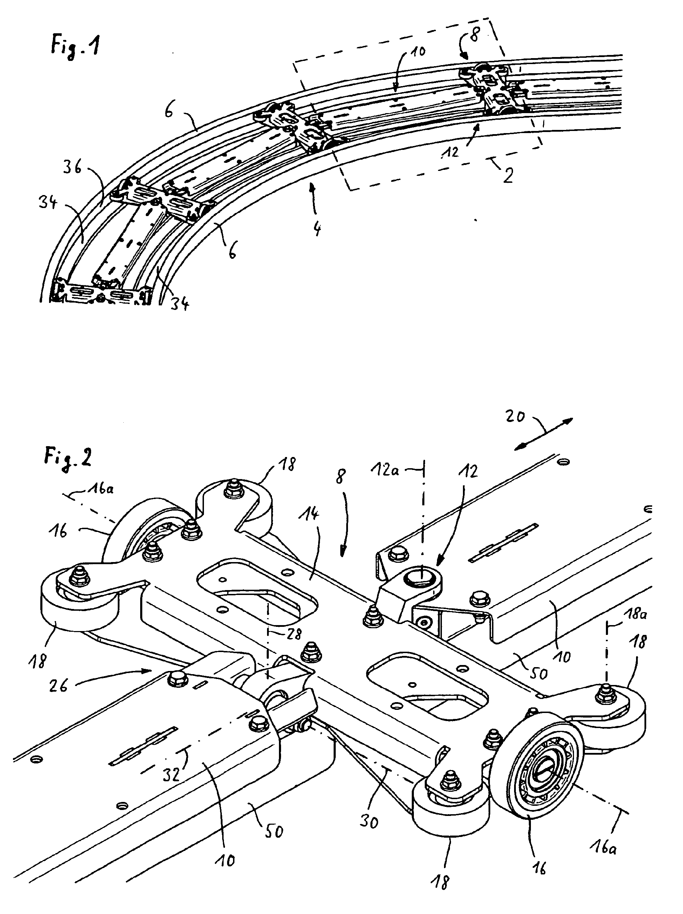

Zunächst wird auf Fig. 1 bis 5 Bezug genommen, in denen die Erfindung in ihren grundsätzlichen Merkmalen anhand eines Ausführungsbeispiels erläutert ist. Der erfindungsgemäße Sortierförderer besteht aus einer Reihe von gelenkig miteinander verbundenen Fahrwagen 2, die entlang einer Fahrbahn 4 geführt und verfahrbar sind, welche vorliegend durch zwei parallel zueinander verlegte Fahrschienen 6 gebildet ist.

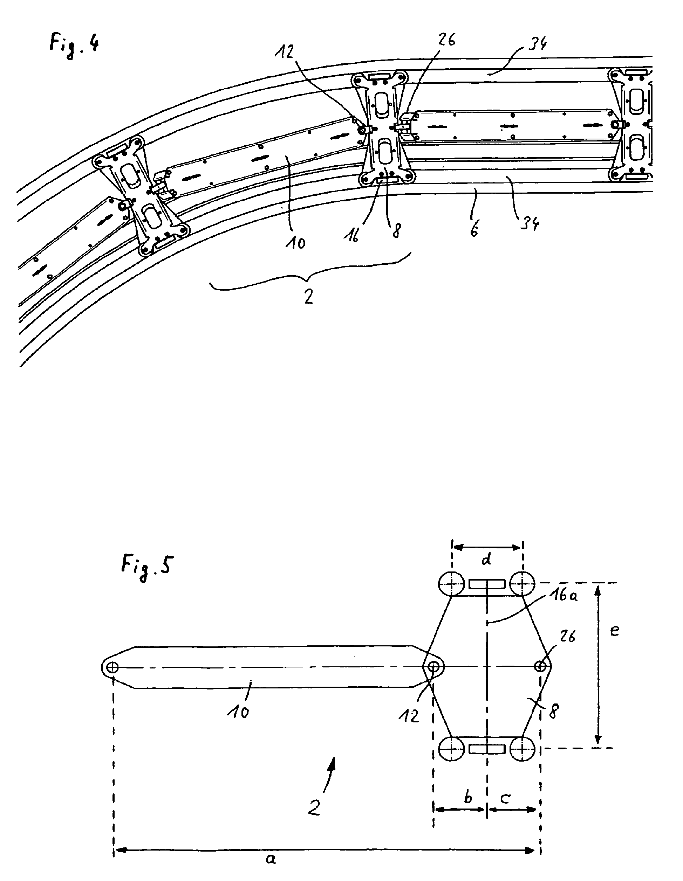

Jeder Fahrwagen besteht aus zwei gelenkig miteinander verbundenen Elementen, nämlich einer Führungseinheit 8 und einer Trageinheit 10, die mittels eines Koppelgelenks 12 miteinander verbunden sind. Das Koppelgelenk 12 weist eine vertikal verlaufende Schwenkachse 12a auf und ermöglicht somit eine schwenkende Relativbewegung von Führungseinheit 8 und Trageinheit 10 zueinander um die genannte Schwenkachse 12a (Fig. 2 zeigt aus Darstellungsgründen eine Ansicht von hinten in Fig. 1 oder 4, um das weiter unten beschriebene Verbindungsgelenk besser zeigen zu können).

Die Führungseinheit 8 besteht aus einem quer zur Fahrtrichtung orientierten Wagenkörper 14, an dessen äußeren Enden jeweils eine Tragrolle 16 mit horizontaler Drehachse 16a und zwei Führungsrollen 18 mit vertikaler Drehachse 18a angeordnet sind. Die Drehachsen 16a der beiden Laufräder 16 stimmen miteinander überein bzw. fluchten miteinander, wobei sie senkrecht zu der Schwenkachse 12a des Koppelgelenks 12 orientiert sind. In einer alternativen Ausführungsform besteht die Möglichkeit, dass die Drehachsen 16a einen Winkel zueinander aufweisen, also die Tragrollen 16 nach innen oder außen schräg stehend angeordnet sind, wobei ihre Drehachsen in einer senkrecht zur Längs- oder Förderrichtung 20 des Förderers liegenden Ebene angeordnet sind.

In einer Variante können auch die Drehachsen der Führungsrollen 18 unter einem Winkel zur Vertikalen angeordnet sein, so dass die Führungsrollen schräg stehend angeordnet sind, wobei auch hier zur Vermeidung übermäßiger Reibung und Reduzierung von Verschleiß ihre Drehachsen selbstverständlich in einer senkrecht zur Fahrtrichtung 20 orientierten Ebene liegen sollten.

In einer bevorzugten Ausführungsform ist die Anordnung allerdings wie dargestellt, d.h. die Tragrollen haben eine gemeinsame Drehachse 16a, die senkrecht zur Schwenkachse 12a und zu den untereinander parallelen Drehachsen 18a der Führungsrollen 18 verläuft.

Je zwei benachbarte Fahrwagen 2 sind mittels eines Verbindungsgelenks 26 gelenkig miteinander verbunden. Das Verbindungsgelenk 26 ist als Kreuzgelenk oder Gelenklager ausgebildet und ermöglicht eine Verdrehung der dadurch verbundenen Elemente, nämlich Führungseinheit 8 eines Fahrwagens und Trageinheit 10 eines benachbarten Wagens, in allen Richtungen (Hochachse 28, Querachse 30 und Längsachse 32). Dadurch können die Fahrwagen nicht nur horizontale, sondern auch vertikale Kurven sowie einen schraubenförmigen Kurvenverlauf (Wendelkurven) problemlos durchlaufen.

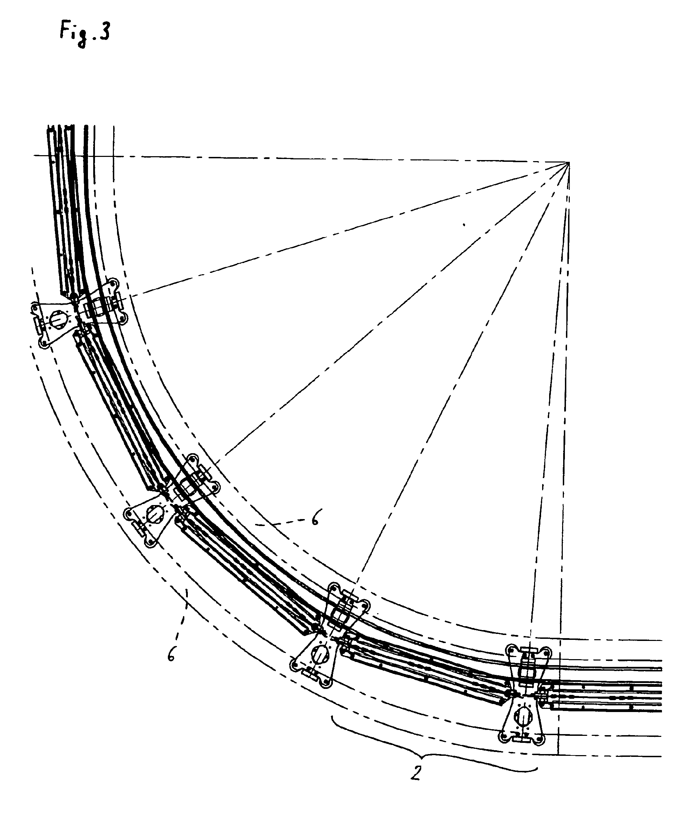

Wie insbesondere Fig. 1 erkennen lässt, weisen die Fahrschienen 6 jeweils eine Tragbahn 34 auf, auf der die Tragrollen 16 abrollen, sowie eine dazu senkrechte Führungsbahn 36, entlang der die Führungsrollen 18 laufen. Obere, den Tragbahnen 34 mit festem Abstand gegenüberstehend angeordnete Abhebesicherungen sind der Einfachheit halber nicht dargestellt. Durch die vier Führungsrollen 18 wird somit die eng zwischen den Führungsschienen 6 geführte Führungseinheit 8 stets so ausgerichtet, dass die Tragrollen 16 auch in Kurven ideal in Fahrtrichtung geführt werden. Die auf einer Linie liegenden Drehachsen 16a der Tragrollen 16 fluchten stets durch den Kurvenmittelpunkt, wie auch Fig. 3 zeigt. Durch den Entfall von nachlaufenden, schwenkbeweglich geführten Tragrollen des Stands der Technik können die Tragrollen auf einer eng begrenzten Spur geführt werden, so dass die Tragbahnen 34 entsprechend schmal gestaltet werden können.

Die Tragbahnen 34 legen eine Fahrbahnebene fest, zu der die Schwenkachse 12a sowie die Drehachsen 18a senkrecht und die Drehachse 16a parallel verlaufen.

Durch die feste Anbindung der Tragrollen an die Führungseinheit ist ein reversierender Betrieb des Sortierförderers problemlos möglich.

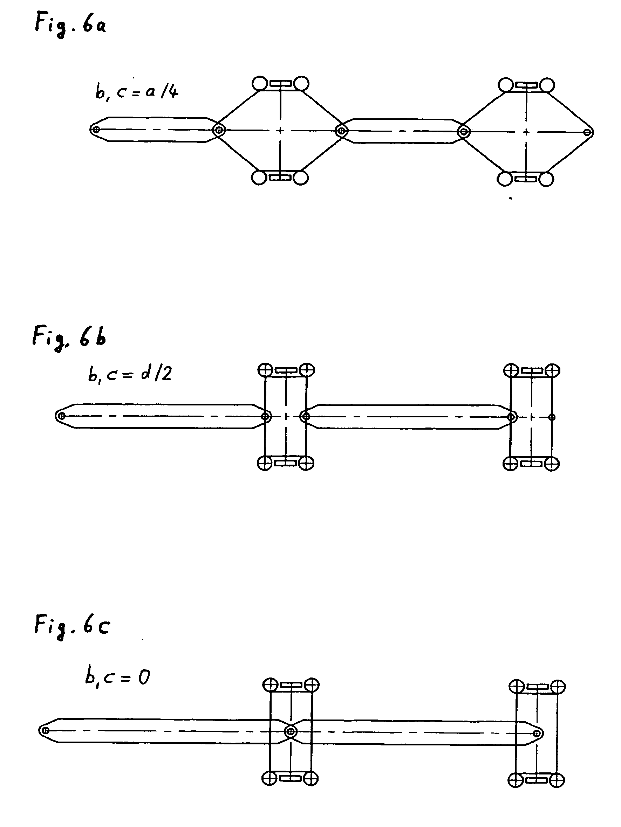

Anhand Fig. 5 und 6 werden nachfolgend drei bevorzugte Ausführungsvarianten der Erfindung erläutert. Fig. 5 zeigt einen Fahrwagen 2, bestehend aus einer Führungseinheit 8 und einer Trageinheit 10, die an dem Koppelgelenk 12 miteinander verbunden sind. Die Führungseinheit 8 weist gegenüberliegend zu dem Koppelgelenk 12 ein Verbindungsgelenk 26 zum Zusammenwirken mit der Trageinheit eines weiteren Führungswagens auf. Die entsprechenden Gelenkpunkte des Verbindungsgelenks 26 und der Trageinheit 10 weisen im gestreckten Zustand gemäß Fig. 5 einen gegenseitigen Abstand a auf, welcher der Fahrwagenteilung entspricht. Das Koppelgelenk 12 ist in einem Koppelgelenkabstand b von der gemeinsamen Drehachse 16a der Tragrollen 16 angeordnet, und das Verbindungsgelenk 26 weist von der Drehachse 16a einen Verbindungsgelenkabstand c auf. Die Führungsrollen 18 sind in einem Führungsrollenabstand d in Längsrichtung voneinander angeordnet, und weisen quer zur Längs- oder Förderrichtung 20 gesehen einen gegenseitigen Achs-Querabstand e auf.

Fig. 6 zeigt drei bevorzugte Ausführungsvarianten im einzelnen. In einer ersten Variante (Fig. 6a) betragen die Koppelgelenk- und Verbindungsgelenkabstände b, c jeweils ein Viertel des Gelenkpunktabstands bzw. der Fahrwagenteilung a, so dass die Länge der Führungs- und Trageinheiten 8, 10 zwischen den jeweiligen Gelenken übereinstimmt und jeweils die Hälfte der Fahrwagenteilung a beträgt. Diese Ausführung ermöglicht eine maximale Reduzierung des Polygoneffektes.

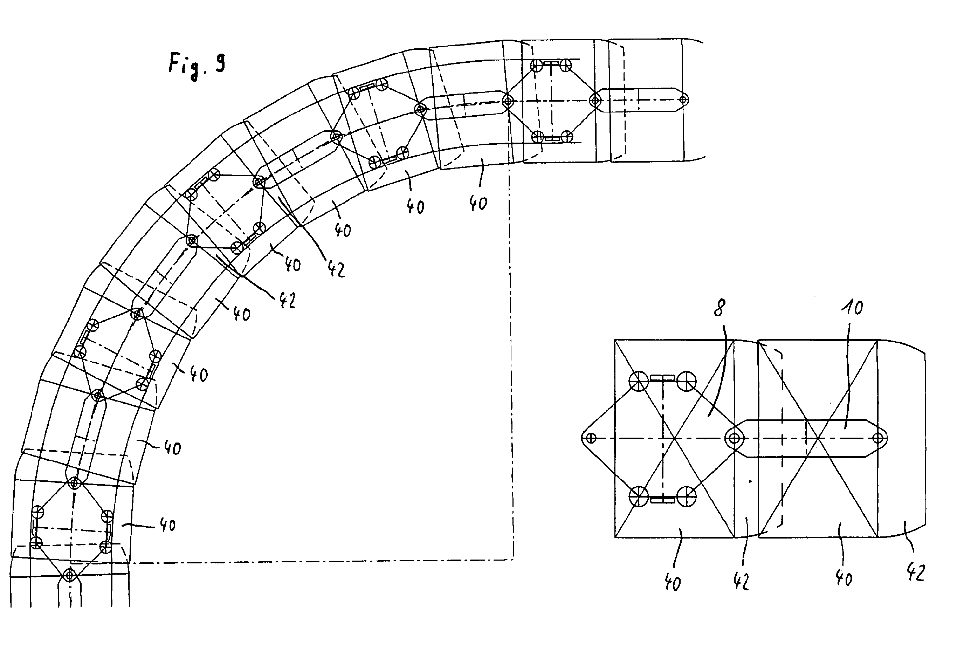

Außerdem ergibt sich der Vorteil, dass zwei gleiche lasttragende Elemente auf einem Fahrwagen angeordnet werden können. Fig. 9 zeigt beispielhaft eine derartige Anordnung. Bei dem dort dargestellten Sortierförderer tragen sowohl die Führungseinheiten 8 als auch die Trageinheiten 10 jeweils ein lasttragendes Element 40, das in dem dargestellten Beispiel in Form eines Quergurtelementes (Quergurtförderers) ausgebildet ist. Sofern hier Tragschalen vorgesehen werden, können sie in bekannter Weise als Kippschalen ausgeführt sein.

In der in Fig. 9 dargestellten Anordnung werden die Zwischenräume zwischen zwei benachbarten Quergurtelementen 40 durch überlappende Abdeckungen 42 geschlossen. Die Abdeckungen 42 untergreifen ein benachbartes lasttragendes Element in der gestrichelt angedeuteten Weise, so dass auch in Kurven keine Lücken zwischen den lasttragenden Elementen entstehen. Durch die Anordnung von zwei gleich großen lasttragenden Elementen auf einem Fahrwagen können die Zwischenräume minimiert werden. Die Bauweise nach Fig. 6a, 9 ermöglicht im Vergleich zu einem Sorter in herkömmlicher Bauweise, bei dem zwei gleiche Tragelemente auf zwei herkömmlichen Fahrwagen angeordnet werden, eine Reduzierung der Anzahl der Bauteile, insbesondere auch der Trag- und Führungsrollen, sowie neben einem Kostenvorteil auch eine Reduzierung der Laufgeräusche.

Die Bauweise nach Fig. 6a ermöglicht eine Reduzierung der Anzahl der Bauteile, insbesondere auch der Trag- und Führungsrollen, sowie neben einem Kostenvorteil auch eine Reduzierung der Laufgeräusche.

Alternativ kann bei der Bauweise nach Fig. 6a ein einziges Tragelement je Fahrwagen vorgesehen sein, welches je nach Zweckmäßigkeit entweder auf der Trageinheit oder auf der Führungseinheit befestigt sein kann.

Fig. 6b zeigt eine Ausführungsvariante, bei der das Koppelgelenk und das Verbindungsgelenk jeweils auf einer Verbindungslinie zwischen zwei in Querrichtung gegenüberliegenden Führungsrollen angeordnet sind. Diese Ausführung bietet den Vorteil, dass sich die Gelenkpunkte, nämlich Koppelgelenk und Verbindungsgelenk, nur minimal von der Mittellinie der Sortergerüstkurve, d.h. der Mitte zwischen den Tragbahnen 34 der Führungsschienen 6, entfernen. Die in der Sorterkette überwiegend vorherrschenden Zugkräfte stabilisieren den Fahrwagen in seiner Ausrichtung innerhalb der Fahrbahn.

Fig. 6c zeigt eine weitere Variante, bei der beide Gelenkpunkte, nämlich Koppelgelenk und Verbindungsgelenk, in einem Punkt zusammenfallen, vorzugsweise auf der Drehachse 16a der Tragrollen. Auch bei dieser Ausführung lässt sich der Polygoneffekt im Vergleich zu einem Fahrwagen herkömmlicher Bauweise reduzieren. Darüber hinaus kann durch das Zusammenfallen der Gelenkpunkte die Anzahl der Bauteile reduziert werden.

Bei allen Ausführungsvarianten besteht die Möglichkeit, die Koppelgelenke 12 und/oder die Verbindungsgelenke 26 in der gleichen Höhe wie die Führungsrollen 18 anzuordnen. Dadurch führt die in Horizontalkurven auftretende Querkraft, die durch die in der Fahrwagenkette bestehenden Zug- oder Druckkräfte hervorgerufen wird, nicht oder nur zu einem minimalen auf den Fahrwagen wirkenden Kippmoment, so dass vermieden wird, dass die Tragrollen von der Fahrschiene abheben und an einer oberen Aushebesicherung anlaufen. Dadurch bedingter Verschleiß und Geräuschentwicklung werden vermieden.

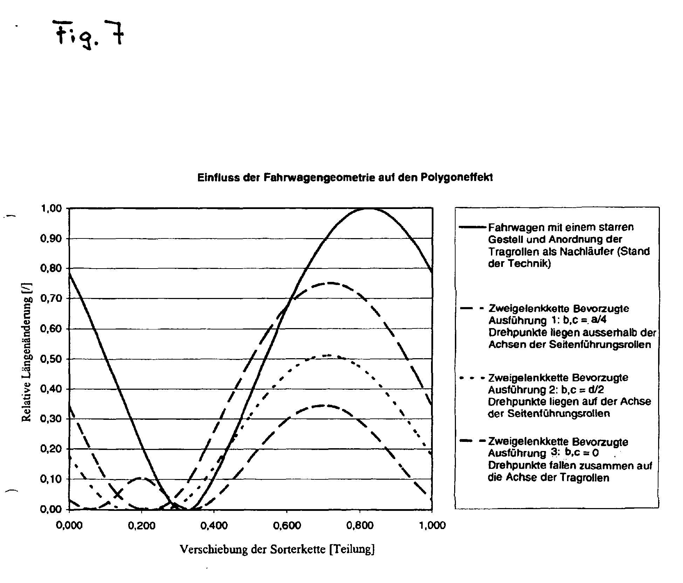

Untersuchungen haben gezeigt, dass der Polygoneffekt und die mit diesem einhergehenden Nachteile bei der erfindungsgemäßen Bauart eines Sortierförderers gegenüber einer Fahrwagenkette mit Fahrwagen aus einem starren Gestell, bei dem die Tragrollen als Nachläufer angeordnet sind, deutlich geringer ausfällt. Dies ist in Fig. 7 erläutert, die den Einfluss der Fahrwagengeometrie auf den Polygoneffekt verdeutlicht.

Die Führungseinheiten und die Trageinheiten können Oberseiten aufweisen, die in gleicher Höhe oberhalb der Tragbahn 34 liegen, so dass die Positionierung der lasttragenden Elemente in nahezu beliebiger Position auf dem Fahrwagen erleichtert wird.

Wegen der nicht unerheblichen Längenausdehnung großer Anlagen als Folge von Temperaturschwankungen sind die Fahrschienen und die Zugkräfte aufnehmenden Elemente der die Sorterkette bildenden Fahrwagen aus Materialien mit möglichst gleichen Längenausdehnungskoeffizienten, idealerweise aus dem gleichen Material, z.B. Stahl oder Aluminium, ausgeführt. Unterschiedliche Längenausdehnungen von Fahrschiene und Sorterkette würden nämlich zu Veränderungen der eingestellten Kettenvorspannung führen, wodurch das Laufverhalten und insbesondere Geräuschentwicklung und Verschleißverhalten negativ beeinflusst würden. Das Gestell der Führungseinheit kann aus alternativen Werkstoffen, z.B. auch Kunststoff, bestehen. Die Zugkraft vom Koppelgelenk zum Verbindungsgelenk wird dann gegebenenfalls durch ein zusätzliches, die Führungseinheit durchdringendes Bauteil geleitet, das gleiche Materialeigenschaften aufweist wie die Führungsschienen.

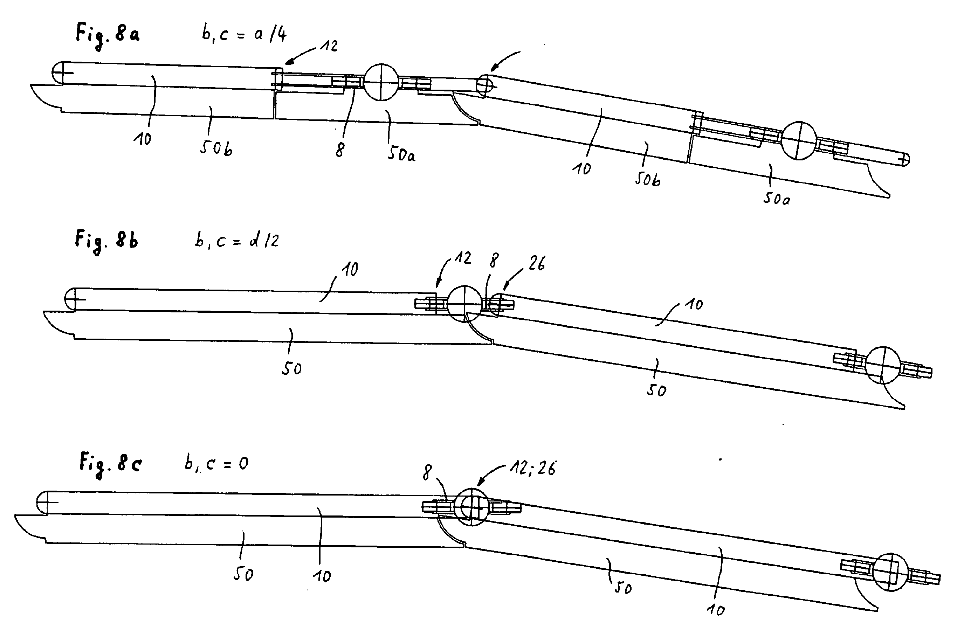

In einer bevorzugten Ausführung (Fig. 8) werden zur Einleitung von Vorschub- bzw. Antriebskräften und damit zur Bewegung der Fahrwagen flache Reaktionsteile 50 bzw. 50a, b, z.B. Aluminiumbleche, vertikal und mittig an den Führungs- und/oder Trageinheiten angebracht. Diese tragen nicht zur Übertragung der in der Sorterkette herrschenden Zugkraft bei. Die Anbindung der Reaktionsteile wird dabei so gestaltet, dass sich diese bei Erwärmung durch das Antriebssystem, z.B. Linearantrieb oder Reibräder, ohne Rückwirkung auf die strukturellen, Zug-/Druckkräfte aufnehmenden Bauteile des Fahrwagens ausdehnen können.

Wie Fig. 8 weiter zeigt, werden die zum Durchfahren von Horizontal- und Vertikalkurven erforderliche Spalte zwischen aneinander grenzenden Reaktionsteilen von benachbarten Fahrwagen so ausgeführt, dass die die Länge bestimmenden Konturen im wesentlichen einen konstanten Radius um den Gelenkpunkt des benachbarten Verbindungsgelenks aufweisen. Im Bereich eines Koppelgelenks befindet sich aufgrund der vertikalen Schwenkachse ein gerader, vertikaler Spalt. Durch diese Ausführung können die Spaltmaße und somit die für das Antriebssystem relevanten Unterbrechungen minimiert werden.

Fig. 8a zeigt eine Ausführungsvariante entsprechend Fig. 6a mit relativ weit voneinander beabstandeten Gelenkpunkten von Koppel- und Verbindungsgelenken. Hierbei bietet es sich an, zwei Reaktionsteile 50a, b vorzusehen, eines der unter der Führungseinheit 8 und eines unter der Trageinheit 10, die einander im Bereich des Koppelgelenks mit einem vertikalen Spalt gegenüberstehen. Im Bereich der Verbindungsgelenke 26 sind wie vorstehend beschrieben kreisförmige Konturen mit einem kreisringförmigen Spalt dazwischen vorgesehen.

Bei einer Bauart gemäß Fig. 6b oder 6c (Fig. 8b, c) genügt es, wenn lediglich unterhalb der Trageinheit ein Reaktionsteil 50 angeordnet ist, da dessen Enden bei Kurvenfahrt nur wenig seitlich ausschwenken, vorausgesetzt, dass bei einer Bauart gemäß Fig. 6b die Trageinheit eine deutlich größere Länge als die Führungseinheit aufweist (Koppelgelenk- und Verbindungsgelenkabstände b, c sind relativ klein im Vergleich zur Fahrwagenteilung a). In Fig. 2, wo eine Anordnung gemäß Fig. 8b dargestellt ist, sind die Reaktionsteile 50 ebenfalls zu erkennen.

### Bezugszeichenliste

- 2: Fahrwagen
- 4: Fahrbahn
- 6: Fahrschiene
- 8: Führungseinheit
- 10: Trageinheit
- 12: Koppelgelenk
- 12a: Schwenkachse
- 14: Wagenkörper
- 16: Tragrolle
- 16a: Drehachse
- 18: Führungsrolle
- 18a: Drehachse
- 20: Förderrichtung
- 26: Verbindungsgelenk
- 28: Hochachse
- 30: Querachse
- 32: Längsachse
- 34: Tragbahn
- 36: Führungsbahn
- 40: lasttragendes Element (Quergurtelement; Tragschale)
- 42: Abdeckung
- 50: Reaktionsteil
- 50a, b: Reaktionsteil

- a: Gelenkpunktabstand (Fahrwagenteilung)
- b: Koppelgelenkabstand
- c: Verbindungsgelenkabstand
- d: Führungsrollenabstand
- e: Querabstand

## Patentansprüche

1. Sortierförderer mit einer Reihe von gelenkig miteinander verbundenen, entlang einer Fahrbahn (4) geführten und verfahrbaren Fahrwagen (2), die jeweils eine Führungseinheit (8) und eine damit gelenkig verbundene Trageinheit (10) aufweisen, wobei jede Führungseinheit (8) auf jeder Seite an übereinstimmenden Längspositionen eine Tragrolle (16) zum Zusammenwirken mit der Fahrbahn (4) aufweist, und wobei zwischen der Führungseinheit (8) und der Trageinheit (10) eines jeden Fahrwagens (2) ein um eine senkrecht zu einer Fahrbahnebene ausgerichtete Schwenkachse (12a) schwenkbares Koppelgelenk (12) und wobei angeordnet ist, **dadurch gekennzeichnet, dass** jeder Tragrolle (16) zwei Führungsrollen (18) zugeordnet sind, von denen eine erste an einer ersten Längsposition mit Abstand vor und eine zweite an einer zweiten Längsposition mit Abstand hinter der jeweiligen Tragrolle (16) angeordnet ist, und wobei zwischen benachbarten Fahrwagen (2) ein in jeder Richtung drehbares Verbindungsgelenk (26) angeordnet ist, und wobei das Verbindungsgelenk (26) und das Koppelgelenk (12) jeweils an Längspositionen außerhalb eines Bereichs zwischen der ersten und der zweiten Längsposition der Führungsrollen (18), an diesen Längspositionen oder an einer übereinstimmenden Längsposition mittig dazwischen angeordnet sind.

2. Sortierförderer nach Anspruch 1, **dadurch gekennzeichnet, dass** das Verbindungsgelenk (26) und das Koppelgelenk (12) einer jeden Führungseinheit (8) an Längspositionen in gleichen Abständen von der Längsposition der Tragrollen (16) angeordnet sind und einen ersten gegenseitigen Abstand aufweisen, und Verbindungsgelenk (26) und Koppelgelenk (12) einer jeden Trageinheit einen gegenseitigen Abstand aufweisen, der mit dem ersten gegenseitigen Abstand übereinstimmt.

3. Sortierförderer nach einem der vorangehenden Ansprüche, **dadurch gekennzeichnet, dass** die Tragrollen (16) einer Führungseinheit (8) um eine gemeinsame horizontale Achse drehbar sind.

4. Sortierförderer nach einem der vorangehenden Ansprüche, **dadurch gekennzeichnet, dass** die Führungsrollen (18) um vertikale Drehachsen (18a) drehbar sind.

5. Sortierförderer nach einem der vorangehenden Ansprüche, **dadurch gekennzeichnet, dass** der Führungsrollen (18) eines Führungswagens (2) in einem Längsabstand angeordnet ist, der kleiner ist als ein Querabstand senkrecht zur Förderrichtung (20).

6. Sortierförderer nach einem der vorangehenden Ansprüche, **dadurch gekennzeichnet, dass** die Führungsrollen (18) der Führungseinheit (8) in gleicher Höhe wie das Verbindungsgelenk (26) angeordnet sind, so dass in horizontalen Kurven aus Zugkräften resultierende Querkräfte nicht zu auf den Fahrwagen (2) wirkenden Kippmomenten führen.

7. Sortierförderer nach einem der vorangehenden Ansprüche, **dadurch gekennzeichnet, dass** die Führungsrollen (18) einer Führungseinheit (8) in gleicher Höhe wie die Drehachsen (16a) der Tragrollen (16) angeordnet sind.

8. Sortierförderer nach einem der vorangehenden Ansprüche, **dadurch gekennzeichnet, dass** die Führungseinheiten (8) und/oder die Trageinheiten (10) ein Reaktionsteil (50; 50a, b) zur Übertragung von Antriebskräften aufweisen.

9. Sortierförderer nach Anspruch 8, **dadurch gekennzeichnet, dass** das Reaktionsteil (50; 50a, b) als Stator oder Antriebsteil eines Linearmotors ausgebildet ist, wobei das jeweils andere Antriebselement im Bereich der Fahrbahn (4) angeordnet ist oder durch diese gebildet wird.

10. Sortierförderer nach Anspruch 9, **dadurch gekennzeichnet, dass** die Reaktionsteile (50; 50a, b) als flache, senkrecht und in Förderrichtung (20) orientierte Bauteile gebildet sind, deren in Förderrichtung (20) weisende Enden im Bereich eines Verbindungsgelenks (26) kreissegmentförmig abgerundet sind und einen engen Spalt zu einem benachbarten Reaktionsteil (50; 50a, b) bilden.

11. Sortierförderer nach einem der vorangehenden Ansprüche, **dadurch gekennzeichnet, dass** auf jedem Fahrwagen (2) mindestens ein lasttragendes Element (40) angeordnet ist.

12. Sortierförderer nach Anspruch 11, **dadurch gekennzeichnet, dass** die lasttragenden Elemente (40) mechanisch oder elektrisch betätigte Kippelemente oder Quergurtelemente sind.

13. Sortierförderer nach einem der Ansprüche 11 oder 12, **dadurch gekennzeichnet, dass** jeder Fahrwagen (2) mit zwei lasttragenden Elementen (40) versehen ist, von denen eines auf der Führungseinheit (8) und eines auf der Trageinheit (10) angeordnet ist.

## Claims

1. A sorting conveyor comprising a series of pivotally interconnected carriages (2) conducted and movable along a track (4), each carriage consisting of a guide unit (8) and a carrying unit (10), where each guide unit (8) has at corresponding longitudinal positions on either side a support roller (16) for engagement with the track (4), and where between the guide unit (8) and the carrying unit (10) of each carriage (2) a coupling hinge (12) is provided which is swivelable around a swivelling axis (12a) disposed perpendicularly to a track plane, and **characterised in that** each support roller (16) is allocated two guide rollers (18), of which a first is situated in a first longitudinal position at a distance in front of, and a second is situated in a second longitudinal position at a distance to the rear of, each support roller (16), and where a connecting hinge (26), rotatable in every direction, is provided between adjacent carriages (2), the connecting hinge (26) and the coupling hinge (12) being respectively situated in longitudinal positions outside an area lying between the first and second longitudinal positions of the guide rollers (18), in these longitudinal positions or in a corresponding longitudinal position exactly midway between them.

2. A sorting conveyor in accordance with Claim 1, **characterised in that** the connecting hinge (26) and the coupling hinge (12) of each guide unit (8) are arranged in longitudinal positions equidistant from the longitudinal position of the support rollers (16) and are separated by a first reciprocal distance, whilst the connecting hinge (26) and coupling hinge (12) of each carrying unit are separated by a reciprocal distance which corresponds to the first reciprocal distance.

3. A sorting conveyor in accordance with one of the preceding Claims, **characterised in that** the support rollers (16) of a guide unit (8) are rotatable around a common horizontal axis.

4. A sorting conveyor in accordance with one of the preceding Claims, **characterised in that** the guide rollers (18) are rotatable around vertical axes (18a).

5. A sorting conveyor in accordance with one of the preceding Claims, **characterised in that** the guide rollers (18) of a carriage (2) are arranged at a longitudinal interval which is smaller than the transverse distance between them measured at right angles to the direction of conveyance (20).

6. A sorting conveyor in accordance with one of the preceding Claims, **characterised in that** the guide rollers (18) of the guide unit (8) are arranged at the same height as the connecting hinge (26), so that at horizontal curves transverse loads arising from tensile forces do not result in tilting moments acting upon the carriage (2).

7. A sorting conveyor in accordance with one of the preceding Claims, **characterised in that** the guide rollers (18) of a guide unit (8) are arranged at the same height as the rotational axes (16a) of the support rollers (16).

8. A sorting conveyor in accordance with one of the preceding Claims, **characterised in that** the guide units (8) and/or the carrying units (10) have a reactive element (50; 50a, b) for the transmission of motive forces.

9. A sorting conveyor in accordance with Claim 8, **characterised in that** the reactive element (50; 50a, b) is formed as a stator or drive component of a linear motor, the other drive element being provided in the area of the track (4) or indeed being formed thereby.

10. A sorting conveyor in accordance with Claim 9, **characterised in that** the reactive elements (50; 50a, b) are formed as flat components which are oriented in the direction of conveyance (20), and that that end of each such component pointing in the direction of conveyance (20) is, in the area of the connecting hinge (26), rounded off circulo-segmentally, leaving a narrow gap between that end and the adjacent reactive element (50; 50a, b).

11. A sorting conveyor in accordance with one of the preceding Claims, **characterised in that** at least one load-bearing element (40) is arranged on each carriage (2).

12. A sorting conveyor in accordance with Claim 11, **characterised in that** the load-bearing elements (40) are mechanically or electrically operated tilting elements or cross-belt elements.

13. A sorting conveyor in accordance with one of Claims 11 and 12, **characterised in that** each carriage (2) is provided with two load-bearing elements (40), of which one is arranged on the guide unit (8) and one on the carrying unit (10).

## Revendications

1. Transporteur de triage comprenant une série de chariots interconnectés de manière pivotante (2) conduits et se déplaçant le long d'une voie de roulement (4), chaque chariot étant constitué d'une unité de guidage (8) et d'une unité de transport (10), où chaque unité de guidage (8) possède, à des positions longitudinales correspondantes de chaque côté, un rouleau de support (16) pour un engagement avec la voie de roulement (4) et où entre l'unité de guidage (8) et l'unité de transport (10) de chaque chariot (2) est prévue une articulation d'accouplement (12) qui est pivotante autour d'un axe pivotant (12a) disposé perpendiculairement à un plan de la voie de roulement et **caractérisé en ce que** chaque rouleau de support (16) est attribué deux rouleaux de guidage (18), dont un premier est situé à une première position longitudinale à une distance en avant de, et un deuxième est situé à une deuxième position longitudinale à une distance à l'arrière de chaque rouleau de support (16) et où une articulation de connexion (26), tournant dans chaque sens, est prévue entre des chariots adjacents (2), l'articulation de connexion (26) et l'articulation d'accouplement (12) étant respectivement situées à des positions longitudinales à l'extérieur d'une zone reposant entre les première et deuxième positions longitudinales des rouleaux de guidage (18), à ces positions longitudinales ou à une position longitudinale correspondante exactement à mi-chemin entre elles.

2. Transporteur de triage selon la Revendication 1, **caractérisé en ce que** l'articulation de connexion (26) et l'articulation d'accouplement (12) de chaque unité de guidage (8) sont aménagées à des positions longitudinales équidistantes de la position longitudinale des rouleaux de support (16) et sont séparées d'une première distance réciproque, tandis que l'articulation de connexion (26) et l'articulation d'accouplement (12) de chaque unité de transport sont séparées d'une distance réciproque qui correspond à la première distance réciproque.

3. Transporteur de triage selon l'une des Revendications précédentes, **caractérisé en ce que** les rouleaux de support (16) d'une unité de guidage (8) tournent autour d'un axe horizontal commun.

4. Transporteur de triage selon l'une des revendications précédentes, **caractérisé en ce que** les rouleaux de guidage (18) tournent autour d'axes verticaux (18a).

5. Transporteur de triage selon l'une des Revendications précédentes, **caractérisé en ce que** les rouleaux de guidage (18) d'un chariot (2) sont aménagés à un intervalle longitudinal qui est plus petit que la distance transversale comprise entre eux mesurée à angles droits au sens de déplacement (20).

6. Transporteur de triage selon l'une des Revendications précédentes, **caractérisé en ce que** les rouleaux de guidage (18) de l'unité de guidage (8) sont aménagés à la même hauteur que l'articulation de connexion (26), de manière à ce qu'à des courbes horizontales, les charges transversales découlant des forces de traction ne causent pas de moments de basculement agissant sur le chariot (2).

7. Transporteur de triage selon l'une des revendications précédentes, **caractérisé en ce que** les rouleaux de guidage (18) d'une unité de guidage (8) sont aménagés à la même hauteur que les axes rotatifs (16a) des rouleaux de support (16).

8. Transporteur de triage selon l'une des Revendications précédentes, **caractérisé en ce que** les unités de guidage (8) et/ou les unités de transport (10) possèdent un élément réactif (50 ; 50a, b) pour la transmission de forces motrices.

9. Transporteur de triage selon la Revendication 8, **caractérisé en ce que** l'élément réactif (50 ; 50a, b) est constitué d'un stator ou d'un composant d'entraînement d'un moteur linéaire, l'autre élément d'entraînement étant prévu dans la zone de la voie de roulement (4) ou étant en effet formé par ce moyen.

10. Transporteur de triage selon la Revendication 9, **caractérisé en ce que** les éléments réactifs (50 ; 50a, b) sont constitués de composants plats qui sont orientés dans le sens de déplacement (20) et **en ce que** l'extrémité de chacun de ces composants pointant dans le sens de déplacement (20), se situe dans la zone de l'articulation de connexion (26) arrondie de manière circulo-segmentée, laissant un espace étroit entre cette extrémité et l'élément réactif adjacent (50 ; 50a, b).

11. Transporteur de triage selon l'une des Revendications précédentes, **caractérisé en ce qu'**au moins un élément porteur (40) est aménagé sur chaque chariot (2).

12. Transporteur de triage selon la Revendication 11, **caractérisé en ce que** les éléments porteurs (40) sont des éléments de basculement à commande mécanique ou électrique ou des éléments à bandes croisées.

13. Transporteur de triage selon l'une des Revendications 11 et 12, **caractérisé en ce que** chaque chariot (2) est prévu avec deux éléments porteurs (40) dont l'un est aménagé sur l'unité de guidage (8) et l'un sur l'unité de transport (10).
